(19) Europäisches Patentamt
European Patent Office
Office européen des brevets

(11) **EP 2 227 943 B1**

(12) **EUROPÄISCHE PATENTSCHRIFT**

(45) Veröffentlichungstag und Bekanntmachung des Hinweises auf die Patenterteilung:
**11.07.2012 Patentblatt 2012/28**

(21) Anmeldenummer: **10001672.4**

(22) Anmeldetag: **18.02.2010**

(51) Int Cl.:
*A01J 11/10* (2006.01)    *A23C 13/00* (2006.01)
*A23C 15/02* (2006.01)    *B04B 5/10* (2006.01)
*B04B 9/10* (2006.01)    *B04B 11/02* (2006.01)
*B04B 13/00* (2006.01)

(54) **Verfahren zum Behandeln von Milch, mit derartigen Verfahren erhaltene Milchprodukte und Verwendung von mit solchen Verfahren erhaltenen Milchprodukten**

Method for treating milk, milk products obtained using such a method and use of milk products obtained using such a method

Procédé de traitement du lait, produit à base de lait obtenus par ledit procédé et utilisation des produits à base de lait obtenus par ledit procédé

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **20.02.2009 DE 102009009932**

(43) Veröffentlichungstag der Anmeldung:
**15.09.2010 Patentblatt 2010/37**

(73) Patentinhaber: **Molkerei Alois Müller GmbH & Co. KG**
**86850 Aretsried (DE)**

(72) Erfinder: **Besner, Hans**
**85354 Freising, (DE)**

(74) Vertreter: **Leinweber & Zimmermann**
**European Patent Attorneys**
**Patentanwälte**
**Rosental 7**
**80331 München (DE)**

(56) Entgegenhaltungen:
**EP-A1- 0 545 053        WO-A1-2005/086994**
**WO-A1-2008/156403        DE-C1- 4 302 165**
**FR-A- 724 056        US-A1- 2003 175 399**
**US-B1- 6 551 648**

- **ZAHAR M ET AL: "Vitamin A Distribution Among Fat Globule Core, Fat Globule Membrane, and Serum Fraction in Milk" JOURNAL OF DAIRY SCIENCE, Bd. 78, Nr. 3, 1995, Seiten 498-505, XP002587901 ISSN: 0022-0302**
- **LUNA P ET AL: "Validation of a Rapid Milk Fat Separation Method to Determine the Fatty Acid Profile by Gas Chromatography" JOURNAL OF DAIRY SCIENCE, AMERICAN DAIRY SCIENCE ASSOCIATION, US LNKD- DOI: 10.3168/JDS.S0022-0302(05)73021-6, Bd. 88, Nr. 10, 1. Oktober 2005 (2005-10-01), Seiten 3377-3381, XP026942100 ISSN: 0022-0302 [gefunden am 2005-10-01]**

**Beschreibung**

Die Erfindung betrifft ein Verfahren zum Behandeln von Milch nach dem Oberbegriff des Patentanspruchs 1.

Ein wesentlicher Bestandteil von Milch ist das darin enthaltene Milchfett. Diese Fettfraktion liegt in Form von Milchfettkugeln vor. Die Milchfettkugeln werden in der Molkereitechnologie mit Hilfe mechanischer Separationstechnik, wie z. B. einer Zentrifuge abgetrennt. Damit wird üblicherweise sämtliches Fett in dem fettreichen Strom (Sahne) konzentriert und auf der anderen Seite ein im wesentlichen fettfreier Strom (Magermilch) hergestellt. Die in Milch enthaltenen Fettkugeln haben unterschiedliche Durchmesser. So ist z. B. der Fettkugeldurchmesser von Kuhmilch im Bereich von etwa 0,6 $\mu$m bis etwa 12 $\mu$m nahezu normal verteilt, mit einem Medianwert $D_{50,3}$ von etwa 4 $\mu$m.

Im Zuge der weiteren Verarbeitung von Milchprodukten wird die Fettkugelgröße üblicherweise durch mechanische Fettkugelzerkleinerung, z. B. mit Hilfe eines Hoch-druck homogenisators auf einen gewünschten kleinen Wert eingestellt. Kleine Fettkugeln sind in vielen Anwendungen erwünscht, um z. B. das Aufrahmen über die Lagerzeit eines flüssigen Produktes zu verringern und/oder die Textur und den sensorischen Eindruck eines Produktes zu verändern. Bei anderen Anwendungen werden große Fettkugeln benötigt, beispielsweise, wenn während der Herstellung oder Bereitung eines Lebensmittels eine Phasenumkehr des Fettes stattfinden soll. Das kann beispielsweise bei der Butterherstellung der Fall sein, bei der mit Hilfe von Scher- und Grenzflächenkräften Fettkügelchen aufgebrochen werden. Größere Fettkugeln benötigen geringere Schubspannungen um sie aufzubrechen als kleinere. Zu diesem Zweck können gezielt Fettkugelagglomerate und -trauben, beispielsweise durch Scherung oder elektrostatische Wirkmechanismen gebildet werden, um die bei einigen Anwendungen benötigten größeren Partikel zu erzeugen.

In der DE 1 692 299 ist die Verwendung der Zentrifugation zur Gewinnung von Buttermilch beschrieben. Gemäß dieser Schrift wird so schlagfähige Sahne hergestellt. Als Ausgangsprodukt für die Buttermilchherstellung wird ein Fettgehalt von mindestens 10 % angegeben. Verfahren, mit denen der Wirkungsgrad bei der Abtrennung von Fett aus Milch verbessert werden kann, sind in der WO 2008/156 403 A1 und der WO 2005/086 994 A1 beschrieben. Gemäß "Journal of Dairy Science", Bd. 78, Nr. 3, 1995, Seiten 498 - 505, JSSN 0022 - 0302 ist der Vitamin A-Gehalt in Milch umgekehrt proportional zur mittleren Teilchengröße der Fettkugeln.

Bei Verwendung herkömmlicher Verfahren zum Behandeln von Milch werden oft nur unbefriedigende Produkteigenschaften erhalten. Beispielsweise wird oft Sahne erhalten, die nur schlecht aufschlagbar ist oder es wird ein übermäßig hoher Anteil von Buttermilch bei der Butterherstellung erzeugt. Diese Probleme treten auch bei Einsatz von in der US 2003/0175399 A1 und der US 6,551,648 B1 beschriebenen Querstromfiltrationsverfahren auf.

Angesichts dieser Probleme im Stand der Technik liegt der Erfindung die Aufgabe zugrunde, Verfahren zum Behandeln von Milch bereitzustellen, mit denen gewünschte Produkteigenschaften ohne übermäßigen Aufwand erreicht werden können.

Erfindungsgemäß wird diese Aufgabe durch die im kennzeichnenden Teil des Anspruchs 1 angegebene Weiterbildung der bekannten Verfahren gelöst, die im wesentlichen dadurch gekennzeichnet ist, daß die Betriebsparameter der Zentrifugenanordnung so eingestellt werden, daß Fraktionen unterschiedlicher Fettkugelgrößenverteilung voneinander getrennt werden.

Diese Erfindung geht auf die Erkenntnis zurück, daß die im Stand der Technik beobachtenden Probleme auf die Besonderheiten der Fettkugeln in Milch zurückzuführen sind. Bei der gängigen Veränderung der in einen breiten Größenbereich verteilten Fettphase hin zu kleinen Fettkugeln, beispielsweise mit Hilfe eines Hochdruckhomogenisators, werden die Fettkugeln mechanisch zerstört und durch Neubesetzung der freiwerdenden Grenzflächen stabilisiert. Hierbei entstehen Fettkugeloberflächen, die sich von der ursprünglichen Fettkugelmembran unterscheiden. Die neue (sekundäre) Fettkugelmembran reagiert in vielen Produkten unterschiedlich im Vergleich zur originären Fettkugelmembran. Zum Beispiel ist die Aggregationsneigung unter verschiedenen Milieubedingungen verändert. Dies führt bei vielen Produkten zu unerwünschten Produkteigenschaften. Als Beispiel sei hier homogenisierte Schlagsahne genannt. Mit dem erfindungsgemäßen Verfahren können Milchfraktionen unterschiedlicher Fettkugelgrößenverteilung ohne Änderung der Fettkugeloberflächen erhalten werden, um so die beobachteten Probleme zu vermeiden.

Weiterhin wird haltbare Milch üblicherweise z. B. mit Hilfe eines Hochdruckhomogenisators homogenisiert, um ein Aufrahmen während der Lagerung zu verringern. Dies ist energieaufwendig und es hat sich gezeigt, daß die Herstellbeschreibung "homogenisiert" für eine Gruppe von Verbrauchern negativ behaftet ist.

Die beschriebenen Nachteile herkömmlicher Verfahren werden auch bei der Homogenisierung von Milch beobachtet, wenn milcheigene Enzyme durch die Zerstörung der Fettkugeln aktiviert werden, was häufig zu Veränderungen im Fertigprodukt führt. Auch diese Veränderungen können durch Einsatz erfindungsgemäßer Verfahren vermieden werden, weil vollständig auf die Zerstörung der Fettkugeln verzichtet werden kann, wenn Fraktionen unterschiedlicher Fettkugelgrößenverteilung in einer Zentrifuge hergestellt werden. Die bei der Herstellung von Butter beschriebenen Probleme gehen in erster Linie darauf zurück, daß bei der gewollten Phasenumkehr von Milchfettkugeln, z. B. bei der Herstellung von Butter oder der gezielten Abtrennung von Fettkugelmembranmaterial, die gesamte Fettkugeldispersion in den jeweiligen Prozeß einbezogen wird. So wird z. B. in Sahne aus Kuhmilch eine Dispersion bestehend aus Fettkugelgrößen zwischen ca. 1 μm und ca. 12 μm in der Butterungsmaschine mechanisch bearbeitet, um die Phasenumkehr zu Butter und Buttermilch zu erreichen. Kleine Fettkugeln werden dabei teilweise in der Buttermilch abgeschieden, was zum einen in der Buttermilch unerwünschte Eigenschaften verursachen kann und zum anderen die Ausbeute der Butterung verschlechtert. Unter Einsatz erfindungsgemäßer Verfahren hergestellte Milchfraktionen können so eingestellt werden, daß für die Butterung optimale Fettkugeigrößen in einer Fraktion enthalten sind, um so die Abscheidung kleiner Fettkugeln in der Buttermilch zu vermeiden.

Ähnliche Vorteile werden auch bei der Gewinnung von Käse erreicht, bei der möglichst wenig Fett mit der abgetrennten Molke abgeschieden werden soll und stattdessen möglichst viel Fett des zuvor in der Kesselmilch eingestellten Fettes in die Käsematrix übergehen soll. Beim Einsatz von natürlichen Fettkugelverteilungen werden bevorzugt die größeren Fettkugeln in der Käsemasse gehalten und die kleineren fließen mit der Molke ab. Die wirtschaftliche Verwertung des in der Molke enthaltenen Fetts ist problematisch, so daß auch hier erfindungsgemäße Verfahren mit Vorteil eingesetzt werden können, um die Fettkugelgrößenverteilung auf den für die Käseherstellung optimalen Wert einzustellen.

Zusammenfassend ist festzustellen, daß mit erfindungsgemäßen Verfahren Fettkugelgrößenverteilungen ohne Fettkugelmembranbeschädigung eingestellt werden können, wobei die technologischen Eigenschaften des Fettkugelmembranmaterials gut ausgenutzt werden können.

Die erfindungsgemäße Einstellung der Fettkugelgrößenverteilung in einer Zentrifugenanordnung macht davon Gebrauch, daß Milchfettkugeln in einem Zentrifugalfeld entsprechend ihrer Größe abgetrennt werden können. Trenneigenschaften im Zentrifugalfeld hängen neben anderen Parametern vom Dichteunterschied zwischen Teilchen und umgebendem Medium und von der Teilchengröße ab. In der Zentrifuge erfolgt eine Stofftrennung und Ausnutzung der Tatsache, daß Partikel oder Medien mit höherer Dichte und der höheren Trägheit und der damit verbundenen höheren Zentrifugalkraft nach außen wandern. Die Zentrifugalkraft hängt von der Dichte p; in einem Volumensegment der Winkelgeschwindigkeit in der Zentrifuge ω und dem radialen Abstand des betreffenden Volumensegmentes r von der Zentrifugenachse gemäß folgender Gleichung ab:

$$F_z = \rho \; x \, \omega^2 \; x \; r$$

Im Verlauf der Stofftrennung verdrängen die dichteren Bestandteile die Bestandteile mit niedriger Dichte, die dadurch zur Mitte der Zentrifuge gelangen. Dieser Verdrängung wirkt allerdings eine Verdrängungskraft entgegen, welche von der Größe der verdrängenden und der Größe der verdrängten Teilchen abhängt. Daher kann in einer Zentrifuge durch Einstellung geeigneter Drehzahlen nicht nur eine Stofftrennung gemäß der Dichte, sondern auch eine Stofftrennung gemäß der Teilchengröße erfolgen. So ist auch eine Abtrennung kleiner Fettkugeln von großen Fettkugeln in Milch durch Beeinflussung der das Gleichgewicht zwischen Zentrifugalkraft einerseits und Verdrängungskraft andererseits beeinflussenden Parameter, wie etwa den Bahnradius und/oder der Drehzahl der Zentrifuge möglich. Im Einzelfall kann die Zentrifugenanordnung über die Drehzahlvariation oder geometrische Veränderungen am Bahnradius (z. B. Steigkanäle) so eingestellt werden, daß keine vollständige Abscheidung der Fettkugeln im Sahnestrom erfolgt, sondern zwei oder mehr fetthaltige Ströme entstehen. Diese Ströme unterscheiden sich dann durch ihre unterschiedlichen Fettkugeldurchmesserverteilungen, haben jedoch die natürliche Fettkugelmembran weitgehend erhalten. Die entstehenden Ströme können separat behandelt werden und z. B. in einem nachgeschalteten Verfahrensschritt bzw. einer nachgeschalteten Separation zu höher fetthaltigen Dispersionen aufkonzentriert werden.

Im Gegensatz zu den bekannten molkereitechnischen Verfahren zur Beeinflussung der Fettkugelgröße bleibt bei Ausführung erfindungsgemäßer Verfahren die natürliche Fettkugelmembran weitestgehend erhalten. Dabei stellen sich in der Fraktion mit kleinen Fettkugeln die folgenden Vorteile ein:

Da die Aufrahmung von Fett vom Fettkugeldurchmesser abhängt, ist es bei Verwendung der Fraktion mit kleineren Fettkugeln möglich, nicht homogenisierte, haltbare flüssige Produkte mit geringer Aufrahmung während der Lagerung herzustellen. Als Beispiel können in diesem Zusammenhang haltbare Milch oder auch Sahneprodukte genannt werden.

Dabei führt die Vermeidung der Homogenisierung zu beträchtlichen Energieeinsparungen. Ferner ist die Auslobung "nicht homogenisiert" auf der Packung eines Produktes möglich und dementsprechend kann auf den Zusatz "homogenisiert" verzichtet werden.

Die Aufschlageigenschaften einer Sahne werden üblicherweise durch eine Homogenisierung negativ beeinflußt, weil die beim Homogenisieren entstandene sekundäre Fettkugelmembran beim Aufschlagen ungünstige Eigenschaften zeigt. Bei Verwendung der "kleinen Fraktion" kann das Aufschlagverhalten positiv beeinflußt werden und z. B. schlagfähige Sahne mit geringem Fettgehalt hergestellt werden.

Die kleineren Fettkugeln weisen insgesamt eine relativ große Fettkugeloberfläche auf, so daß auch etwaige Inhaltsstoffe oder Bestandteile der Fettkugelmembran pro Fettmasse in größerer Menge enthalten sind. Physiologisch und technologisch wertgebende Bestandteile sind z. B. die Phospholipide und andere Membranbestandteile. Die Zugabe besonders vieler kleiner Fettkugeln zu einem Produkt stellt einen ernährungsphysiologischen Vorteil dar. Weiterhin kann die Gewinnung etwaiger wertvoller Membranbestandteile durch die Vorselektion der kleineren Fraktion in ihrer Ausbeute verbessert werden. Es können kleine Fettkugeln angesetzt werden, ohne daß bei der Herstellung der kleinen Fettkugeln (Homogenisierung) unerwünschte Enzyme aktiviert werden.

In der Fraktion mit großen Fettkugeln werden folgende Vorteile beobachtet:

Die Butterung von Sahne mit größeren Fettkugeln verläuft effizienter und schneller als bei Verwendung der gesamten Fettkugeldurchmesserverteilung. Weniger mechanische Energie ist für die Phasenumkehr nötig, so daß modifizierte, in ihren Investitionskosten günstigere Methoden der Phasenumkehr möglich sind. Für die Butterung kann auch Rahm mit geringerem Fettgehalt eingesetzt werden, was Vorteile in der Scher- und Transportstabilität des Rahmens mit sich bringt.

Weniger Fett geht in die Buttermilch über, so daß die Ausbeute in der Butter steigt.

Durch die Mischung von kleinen und großen Fraktionen kann die Textur der Butter, z. B. durch Veränderung der Streichfähigkeit, modifiziert werden.

Bei der Butterölgewinnung wird eine hochkonzentrierte Dispersion gebrochen, wobei möglichst wenig Wasser in der Fettfraktion übrig bleiben soll. Durch Verwendung von großen Fettkugeln ist die Herstellung effizienter.

Große Fettkugeln können bei der Käseherstellung der Kesselmilch mit dem Effekt zugesetzt werden, daß weniger Fett in der Molke verloren geht und die Einbindung in der Käsematrix verbessert wird. Dadurch sind Veränderungen in der Käsetextur möglich.

Bei der Milchfiltration von Rahm treten häufig Probleme der Verblockung von Filterporen dadurch auf, daß die kleinen Fettkugeln verstopfend und belegend wirken. Bei Verwendung von großen Fettkugeln ist eine bessere Filtration möglich.

Erfindungsgemäß wird mit der Zentrifugenanordnung eine Rahmfraktion nach Anspruch 1 von einer Magermilchfraktion nach Anspruch 1 getrennt. Der Fettgehalt der Magermilchfraktion beträgt 10 Gew.-% oder weniger, insbesondere 5 Gew.-% oder weniger. Im Rahmen der Erfindung hat es sich weiter als günstig erwiesen, wenn die Zentrifugenanordnung 2, 3 oder mehr vorzugsweise verschiedene Zentrifugen aufweist, deren Betriebsparameter, insbesondere Drehzahlen, zur Trennung der Fraktionen vorzugsweise unabhängig voneinander eingestellt werden. Wie vorstehend erläutert hat es sich im Rahmen der Sahneherstellung als besonders günstig erwiesen, wenn der Fettgehalt der Magermilchfraktion mit einer geringeren mittleren Fettkugelgröße in einer nachgeschalteten Separation aufkonzentriert und auf einen Wert von 10 Gew.-% oder mehr, insbesondere 20 Gew.-% oder mehr, besonders bevorzugt etwa 22 Gew.-% eingestellt wird. Im Rahmen der Erfindung können die mit dem Trennvorgang und/oder der nachgeschalteten Separation erhaltenen Fraktion selbstverständlich auch zu Lebensmitteln, wie etwa Milch, Sahne, Sahneprodukten, Käse, Joghurt, Joghurterzeugnissen, Butter, Buttererzeugnissen, Getränken, Desserts und/oder zu Pharmaka weiter verarbeitet werden.

Wie vorstehend erläutert können mit erfindungsgemäßen Verfahren erhaltene Magermilchfraktionen mit besonderem Vorteil zur Gewinnung von Fettkugelmembranmaterial, Phospholipiden und anderen Fettkugelmembranbestandteilen verwendet werden.

Nachstehend wird die Erfindung anhand eines Ausführungsbeispiels erläutert:

Milch mit einem Fettgehalt von 3,8 % wird bei einer Temperatur von 55°C über einen als Zentrifuge ausgeführten Separator mit verringerter Drehzahl zentrifugiert. Dabei entsteht eine Trennung der Milch in zwei Fraktionen. Die niederfettere Fraktion enthält überwiegend kleinere Fettkugeln, die höherfette Fraktion die größeren. Die beiden Ströme werden jeweils über einen weiteren Separator mit hoher Trennschärfe gefahren, so daß zwei Sahnen mit unterschiedlicher Fettkugelgrößenverteilung entstehen, von denen jede einen Fettgehalt aufweist, der über dem Fettgehalt herkömmlicher Magermilch liegt.

Erfindungsgemäß können auch mehrere Zentrifugierschritte zur Trennung der Fettkugelgrößen hintereinander ausgeführt werden, um eine bessere Trennschärfe zu erreichen.

Weiterhin kann auch eine Zentrifuge dergestalt betrieben werden, daß nicht die Drehzahl in einem für die Bauart untypischen Bereich eingestellt wird, sondern die Steigkanäle oder auch der Scheideteller oder das Trennpaket derart gestaltet sind, daß sie unscharfe Fahrweise zulassen, so daß die entstehenden Ströme jeweils einen Fettgehalt größer von 0,1% Fett aufweisen.

Milch und Sahne mit einem größeren Fettgehalt sind ebenfalls für die o. g. Trennung der Fettkugelgrößen geeignet. Zum Beispiel kann die Zentrifuge mit einer Sahne mit 10% Fett beschickt werden. Der Fettgehalt im Zulauf sollte nicht zu hoch gewählt werden, weil sich dadurch die Gefahr der Fettschädigung während der Trennung erhöht. Der Fettgehalt sollte 50 Gew.-% nicht übersteigen, vorzugsweise 45 Gew.-% oder weniger betragen.

Die Fraktion mit den kleineren Fettkugeln kann z. B. auf den gewünschten Fettgehalt durch nachgeschaltete Separation eingestellt werden und z. B. der Erhitzung zugeführt werden. So kann eine erhitzte nicht homogenisierte Milch oder Sahne hergestellt werden.

Bei Aufkonzentration der kleinen Fettkugeln auf einen Fettgehalt von ca. 22% entsteht eine Sahne, die in ihren Aufschlageigenschaften mindestens gleich gut gewertet wird wie Schlagsahne mit 30% Fett. Auch noch geringere Fettgehalte sind möglich.

Bei einer Konzentrierung zu Schlagsahne mit einem Fettgehalt von 30 Gew.-% oder mehr entsteht ein ausgezeichnet aufschlagbares Produkt, das aufgrund seiner kleinen Fettkugeln weniger Aufrahmung während der Lagerung aufweist.

Die Gewinnung von Fettkugelmembranmaterial oder Fraktionen daraus wird durch den Einsatz kleiner natürlicher Fettkugeln um den Faktor 5-10 in ihrer Ausbeute optimiert.

Wird die Fraktion mit den kleinen Fettkugeln zum Buttern verwendet, wird die Fettmenge, aber auch der Phospholipidgehalt in der Buttermilch erhöht.

Bei Verwendung der Fraktion der größeren Fettkugeln in der Butterei wird eine deutlich verbesserte Ausbeute festgestellt. Es kann auch Rahm mit z. B. 30% Fett gut verbuttert werden. Dadurch ergeben sich Vorteile in der Transport- und Scherstabilität des Rahmens. Weniger Fett geht in die Buttermilch über.

**Patentansprüche**

1. Verfahren zum Behandeln von Milch, bei dem die Milch einem Trennvorgang in einer Zentrifugenanordnung unterzogen wird, **dadurch gekennzeichnet, daß** die Betriebsparameter der Zentrifugenanordnung so eingestellt werden, daß Fraktionen unterschiedlicher Fettkugelgrößenverteilung voneinander getrennt werden, wobei eine Rahmfraktion mit einem Fettgehalt von 5 Gew.-% oder mehr, insbesondere 10 Gew.-% oder mehr, und einem großen mittleren Fettkugeldurchmesser von einer Magermilchfraktion mit einem Fettgehalt von 10 Gew.-% oder weniger, insbesondere 5 Gew.-% oder weniger, vorzugsweise aber einem Fettgehalt von 0,1 Gew.-% oder mehr, insbesondere 0,5 Gew.-% oder mehr, und einem geringen mittleren Fettkugeldurchmesser getrennt wird, **dadurch gekennzeichnet, daß** der Fettgehalt der Magermilchfraktion in einer nachgeschalteten Separation auf einen Wert von 10 Gew.-% oder mehr, insbesondere 20 Gew.-% oder mehr, besonders bevorzugt etwa 30 Gew.-%, eingestellt wird, wobei die mittlere Fettkugelgröße in der Rahmfraktion auf einen Median $D_{50,3}$ von 5 $\mu$m oder mehr eingestellt wird und die mittlere Fettkugelgröße in der Magermilchfraktion auf einen Wert $D_{50,3}$ von 3 $\mu$m oder weniger eingestellt wird..

2. Verfahren nach Anspruch 1, **dadurch gekennzeichnet, daß** die Zentrifugenanordnung zwei, drei oder mehr vorzugsweise verschiedene Zentrifugen aufweist, deren Betriebsparameter, insbesondere Drehzahlen, zur Trennung der Fraktionen vorzugsweise unabhängig voneinander eingestellt werden.

3. Verfahren nach einem der vorhergehenden Ansprüche, **dadurch gekennzeichnet, daß** mindestens eine der mit dem Trennvorgang und/oder der nachgeschalteten Separation erhaltenen Fraktion zu Lebensmitteln, wie etwa Milch, Sahne, Sahneprodukten, Käse, Joghurt, Joghurterzeugnissen, Butter, Buttererzeugnissen, Getränken, Desserts und/oder Pharmaka weiter verarbeitet wird.

4. Verwendung der mit Verfahren nach einem der vorhergehenden Ansprüche erhaltenen Magermilchfraktion zur Gewinnung von Fettkugelmembranmaterial, Phospholipiden und/oder anderen Fettkugelmembranbestandteilen.

**Claims**

1. A method for treating milk wherein the milk is subjected to a separation process in a centrifuge arrangement, **characterised in that** the operating parameters of the centrifuge arrangement are set in such a way that fractions of different fat globule size distribution are separated from one another, a cream fraction with a fat content of 5% by weight or more, in particular 10% by weight or more, and a large average fat globule diameter of a skimmed milk fraction with a fat content of 10% by weight or less, in particular 5% by weight or less, preferably however a fat content of 0.1 % by weight or more, in particular 0.5% by weight or more, and a low average fat globule diameter being separated, **characterised in that** the fat content of the skimmed milk fraction in a downstream separation is set at a value of 10% by weight or more, in particular 20% by weight or more, particularly preferably approximately 30% by weight, the average fat globule size in the cream fraction being set at a median $D_{50,3}$ of 5 $\mu$m or more, and the average fat globule size in the skimmed milk fraction being set at a value $D_{50,3}$ of 3 $\mu$m or less.

2. The method according to Claim 1, **characterised in that** the centrifuge arrangement has two, three or more preferably different centrifuges, the operating parameters of which, in particular revolution speeds, are preferably set independently of one another in order to separate the fractions.

3. The method according to any of the preceding claims, **characterised in that** at least one of the fractions obtained with the separating process and/or the downstream separation are processed into food items such as for example milk, cream, cream products, cheese, yoghurt, yoghurt products, butter, butter products, drinks, desserts and/or pharmaceutical products.

4. The use of the skimmed milk fraction obtained by the method according to any of the preceding claims for obtaining fat globule membrane material, phospholipids and/or other fat globule membrane components.

**Revendications**

1. Procédé de traitement du lait, dans lequel le lait est soumis à un processus de séparation dans un dispositif de centrifugation, **caractérisé en ce que** les paramètres d'exploitation du dispositif de centrifugation sont ajustés de telle manière que des fractions grasses de granulométries différentes sont séparées les unes des autres, en obtenant ainsi la séparation entre une fraction de crème dont la teneur en matières grasses est d'au moins 5 % en poids, notamment d'au moins 10 % en poids, et dont le diamètre moyen des particules de matières grasses est élevé, et une fraction de lait écrémé dont la teneur en matières grasses est de 10 % en poids ou moins, notamment de 5 % en poids ou moins, celle-ci étant toutefois de préférence d'au moins 0,1 % en poids, notamment d'au moins 0,5 % en poids et dont le diamètre moyen des particules de matières grasses est faible, et **caractérisé en ce que** la teneur en matières grasses de la fraction de lait écrémé est ajustée, au cours d'une séparation ultérieure, à une valeur d'au moins 10 % en poids, notamment d'au moins 20 % en poids, et tout particulièrement d'environ 30 % en poids, la granulométrie moyenne des particules de matières grasses de la fraction de crème étant ajustée à une moyenne $D_{50,3}$ d'au moins 5 $\mu$m et la granulométrie moyenne de la fraction de lait écrémé étant ajustée à une valeur $D_{50,3}$ de 3 $\mu$m ou moins.

2. Procédé selon la revendication 1, **caractérisé en ce que** le dispositif de centrifugation présente deux, trois ou plus de trois centrifuges, de préférence différentes, dont les paramètres d'exploitation, notamment les vitesses de rotation, sont ajustés de préférence indépendamment les uns des autres pour pouvoir séparer les fractions.

3. Procédé selon l'une des revendications précédentes, **caractérisé en ce qu'**au moins une fraction obtenue par le processus de séparation et/ou la séparation ultérieure est encore transformée en produits alimentaires, par exemple en lait, crème, produits à base de crème, fromage, yaourt, produits à base de yaourt, beurre, produits à base de beurre, boissons, desserts et/ou médicaments.

4. Utilisation de fractions obtenues suivant le procédé selon l'une des revendications précédentes pour produire des matières membranaires de particules grasses, phospholipides et/ou autres composants membranaires de particules grasses.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1692299
- WO 2008156403 A1
- WO 2005086994 A1
- US 20030175399 A1
- US 6551648 B1

**In der Beschreibung aufgeführte Nicht-Patentliteratur**

- *Journal of Dairy Science,* 1995, vol. 78 (3), 498-505